# FASCICULE DE BREVET EUROPEEN

(11) **EP 2 103 855 B1**
(45) Date de publication et mention de la délivrance du brevet: **02.11.2011**
(21) Numéro de dépôt: 09290177.6
(22) Date de dépôt: 12.03.2009
(51) Int. Cl.: F16L 3/14

(54) **Suspente de conduites d'évacuation**
Aufhängung für Abführleitungen
Discharge duct rigging line

(30) Priorité: 18.03.2008 FR 0801457
(43) Date de publication de la demande: 23.09.2009
(73) Titulaire: KP1, 84000 Avignon (FR)
(72) Inventeur: Goumarre, Florent, 30200 Orsan (FR)
(74) Mandataire: Robert, Jean-Pierre

(56) Documents cités:
- EP-A- 0 085 618
- GB-A- 2 320 077
- US-A- 3 261 580

## Description

La présente invention concerne une suspente pour canalisations, notamment canalisations de collecte et d'évacuation des eaux usées dans le vide sanitaire d'une habitation individuelle.

### ARRIERE PLAN DE L'INVENTION

Le vide sanitaire d'une maison d'habitation est généralement utilisé pour installer les canalisations de collecte et d'évacuation des eaux usées de la maison afin de les rassembler sur un conduit unique de raccordement à l'égout ou à une fosse sceptique.

Ces canalisations forme un réseau sensiblement horizontal qui est le plus souvent calé par des moyens de fortune (parpaings vaguement cimentés à même le sol du vide sanitaire, ...) afin de fixer la position de chacune des branches de ce réseau pour qu'elle présente la pente voulue d'écoulement gravitaire des eaux usées collectées. Cette mise en place de fortune est sujette à désordres au fil du temps car les supports peuvent s'effriter sous l'effet de l'atmosphère humide règnent dans cet espace. Le sol même sur lequel ces supports reposent peut être modifié sous l'effet de nombreux facteurs climatiques ou hydrologiques (écoulements d'eau souterraine, ravinement, érosion,...). Les conduites ne sont plus alors soutenues que par leurs raccords aux descentes d'eau traversant le plancher et pèsent de tout leur poids au niveau de ces raccordements qui finissent par céder.

Les documents US-A-3 261 580 et GB-A 2 320 077 illustrent des suspentes pour canalisations qui mettent en oeuvre des rubans refermés sur eux-mêmes en forme de boucle.

La présente invention entend proposer une solution beaucoup plus pérenne à la constitution de ce réseau de collecte des eaux usées dans l'espace de vide sanitaire d'une maison ou d'un petit immeuble.

### BREVE DESCRIPTION DE L'INVENTION

A cet effet, l'invention concerne donc une suspente pour canalisation comprenant un premier tronçon de ruban rectiligne comportant, au voisinage de l'une de ses extrémités, des moyens pour son accrochage à la face inférieure d'un plancher et, au voisinage de son autre extrémité, deux encoches latérales en vis-à-vis, créant ainsi une tête rattachée au tronçon de ruban par une partie rétrécie et un second tronçon de ruban susceptible d'être élastiquement refermé sur lui-même en boucle avec recouvrement de ses extrémités, chacune desquelles étant pourvue d'une lumière oblongue dont la largeur est comprise entre la largeur de la partie rétrécie du premier ruban et la largeur de la tête et dont la longueur est telle que pour un recouvrement donné desdites extrémités, il existe un passage dont la dimension dans le sens de la refermeture permet à la tête de traverser les deux extrémités superposées.

Plusieurs formes de lumière sont possibles. L'une d'elles est une ouverture de longueur sensiblement égale à la largeur de la tête du premier ruban avec des extrémités semi circulaires.

Dans une autre forme, chaque lumière comporte une première partie sensiblement circulaire dont le diamètre est au moins égal à la largeur de la partie rétrécie du premier tronçon de ruban et une fente, ouverte sur la partie centrale et s'étendant à l'opposé de la partie extrême correspondante du second tronçon par rapport à la partie circulaire, la plus grande dimension de cette lumière étant d'une valeur permettant le passage à l'intérieur du collier de l'extrémité du premier tronçon de ruban, au-delà de sa partie rétrécie. On notera à ce propos que cette plus grande dimension de la lumière peut être plus petite que la largeur de la tête du ruban de suspension. En effet, la largeur et le profil des encoches et la longueur de la partie de tête au-delà de ces encoches peuvent être tels qu'une introduction en biais du ruban de suspension dans les lumières superposées peut être possible.

Cette suspente, lorsqu'elle est assemblée, se présente donc sous la forme d'un collier de soutien qui peut être formé autour d'une canalisation et qui peut tourner autour de son point de liaison à l'extrémité du premier tronçon de ruban (suspension). En effet, en refermant le second tronçon sur lui-même, on parvient à superposer les deux lumières et permettre ainsi le passage de l'extrémité du premier ruban au travers de ses extrémités superposées et son logement à l'intérieur du collier En supprimant l'effort de refermeture du second ruban sur lui-même, les extrémités en recouvrement du second ruban s'éloignent l'une de l'autre et soit l'une extrémité circulaire de chaque lumière oblongue, soit le bord de la partie circulaire de chaque lumière à fente porte sur le fond correspondant de chacune des encoches du premier ruban. Le collier peut ainsi tourner librement par rapport au ruban de suspension avec néanmoins un frottement des bords de la partie rétrécie sur le bord de chaque partie circulaire avec un point dur lorsque la tête du premier ruban est transversale au second ruban.

Dans une variante de réalisation d'utilisation, on a prévu, pour éviter ce frottement, entre les deux extrémités en recouvrement du ruban formant le collier, des moyens de butée qui limitent leur déplacement relatif après relâchement de l'effort de refermeture à une valeur telle que la partie circulaire de chaque lumière à fente demeure strictement superposée à l'autre ou telle que l'extrémité semi circulaire de chaque lumière soit le complément de l'autre. Ainsi, comme il n'y plus d'appui permanent des bords de cette lumière centrale contre les bords de la partie rétrécie, le frottement en rotation est supprimé.

De manière préférée, les moyens de butée susdits sont constitués par un ergot ménagé au voisinage de l'une des extrémités du ruban et une fenêtre ménagée dans l'autre extrémité de ce ruban, la forme au repos de ce ruban étant telle que, lors de la refermeture, le bord extrême du ruban du côté de la fenêtre vient glisser élastiquement sur une pente dont est pourvu l'ergot, à l'opposé de sa face d'accrochage dans cet orifice de même que le bord de la fenêtre le plus éloigné de ce bord

Les moyens d'accrochage du ruban de suspension au plancher comprennent une série de perforations séparées d'un pas régulier, ménagée tout le long du ruban.

Si le plancher est un plancher à poutrelles à talon, les moyens d'accrochage comprennent aussi un serre-joint pourvu d'une languette qui présente un crochet destiné à coopérer avec l'une des perforations susdites. De manière préférée, ce crochet est formé par une lame élastique en S dont l'extrémité est apte à se loger dans une perforation adjacente de celle crochetée. On réalise ainsi un encliquetage de la suspension formant une sécurité contre un soulèvement intempestif de la suspension, notamment au moment du montage. La vis du serre-joint est à manoeuvre manuelle au moyen par exemple d'une tête à oreilles.

La suspente de l'invention présente l'avantage d'être mise en oeuvre sans recours à un outil de montage. Le gain de temps qu'elle permet dans la réalisation des réseaux de conduits d'évacuation dans les vides sanitaires est considérable et la pérennité de l'installation beaucoup plus grande que celle obtenue classiquement.

D'autres caractéristiques et avantages de l'invention ressortiront de la description donnée ci-après d'un exemple de sa réalisation.

### BREVE DESCRIPTION DES DESSINS

Il sera fait référence aux dessins annexés parmi lesquels :
- la figure 1 illustre une suspente conforme à l'invention avant son montage,
- la figure 2 illustre une autre forme de lumière,
- la figure 3 illustre la suspension d'une canalisation sous un plancher à poutrelles à talon au moyen de la suspente de l'invention et d'un serre-joint à vis actionnée manuellement.

### DESCRIPTION DETAILLEE DE L'INVENTION

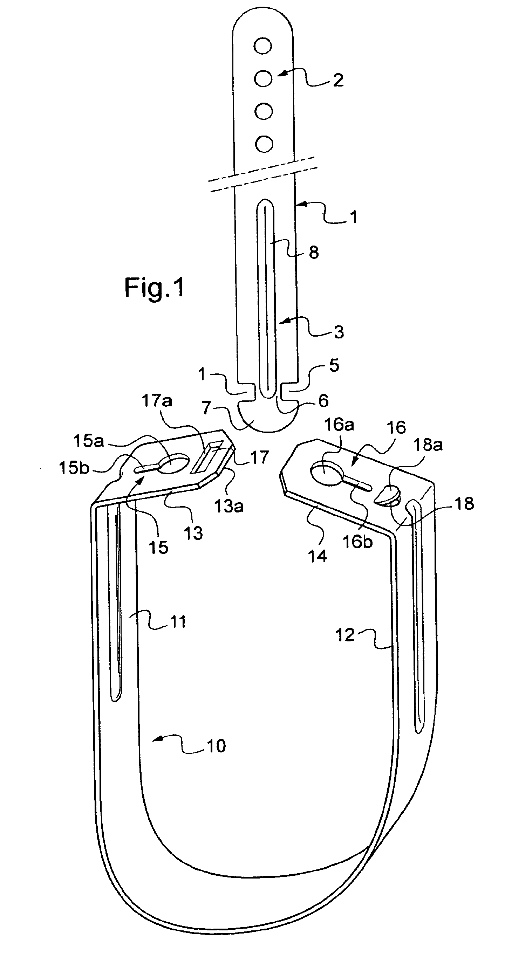

Le dispositif de l'invention est représenté à la figure 1 avant son montage en une suspente.

Un premier tronçon de ruban de suspension 1 est représenté vertical, de face. Il présente une partie d'extrémité 2 d'accrochage à la face inférieure du premier plancher d'une maison, sous lequel s'étend le vide sanitaire. A l'opposé de cette partie 2, le ruban 1 présente une extrémité inférieure 3 qui est encochée. Les deux encoches 4 et 5 délimite une partie rétrécie 6 de ce ruban au-delà de laquelle on trouve une partie distale 7 qui forme une tête de même largeur que la largeur courante du ruban. La matière du ruban sera du type de celle utilisée dans les suspentes de faux-plafond, par exemple de la tôle d'acier galvanisé. Une rainure emboutie 8 est réalisée au niveau de l'extrémité 3 de ce ruban pour la raidir.

Le dispositif comporte un second tronçon de ruban 10, dans la même matière que celle du ruban 1 qui est recourbé en une forme générale permanente de U. L'extrémité de chacune des branches 11 et 12 de cet arceau est repliée, presque à l'équerre, en direction de l'autre pour former des pattes 13 et 14 de manière que lorsqu'on referme les branches l'une vers l'autre, la patte 13 se place immédiatement au-dessus de l'autre 14. Chaque patte 13, 14 comporte une lumière 15, 16, en trou de serrure c'est-à-dire avec une partie circulaire 15a, 16a, et une fente 15b, 16b, qui débouche dans la partie circulaire et qui s'étend à l'opposé du bord extrême de chaque patte. Le diamètre de chaque partie circulaire 15a, 16a de la lumière est au moins égal à la largeur de la partie rétrécie 6 du premier ruban. La largeur de chaque fente 15b, 16b est quant à elle supérieure à l'épaisseur du premier ruban. La dimension de chaque lumière, prise dans le sens longitudinal est telle que lorsque que les deux lumières sont superposées, le passage ainsi formé au travers du second ruban est suffisant pour que la tête 7 du premier ruban puisse y passer.

L'une des pattes, ici la patte 13, est pourvue d'une fenêtre 17 tandis que l'autre patte 14 comporte un ergot 18, ici formé par une languette découpée dans la patte elle-même et relevée. Lors de la refermeture du U, le bord extrême 13a de la patte 13 vient glisser sur l'extrados 18a de la languette 18 de même que le bord 17a de la fenêtre 17 le plus éloigné du bord 13a. L'opérateur peut alors atteindre la superposition des lumières afin d'introduire la tête 7 du ruban de suspension. Cette opération accomplie, l'opérateur relâche le U et les branches s'écartent l'une de l'autre jusqu'à l'accrochage de l'ergot 18 dans la fenêtre 17. Leur position sur les pattes est telle que, dans cet état, les parties circulaires 15a et 16a sont en parfaite superposition et le collier peut librement tourner autour de l'axe longitudinal du ruban de suspension.

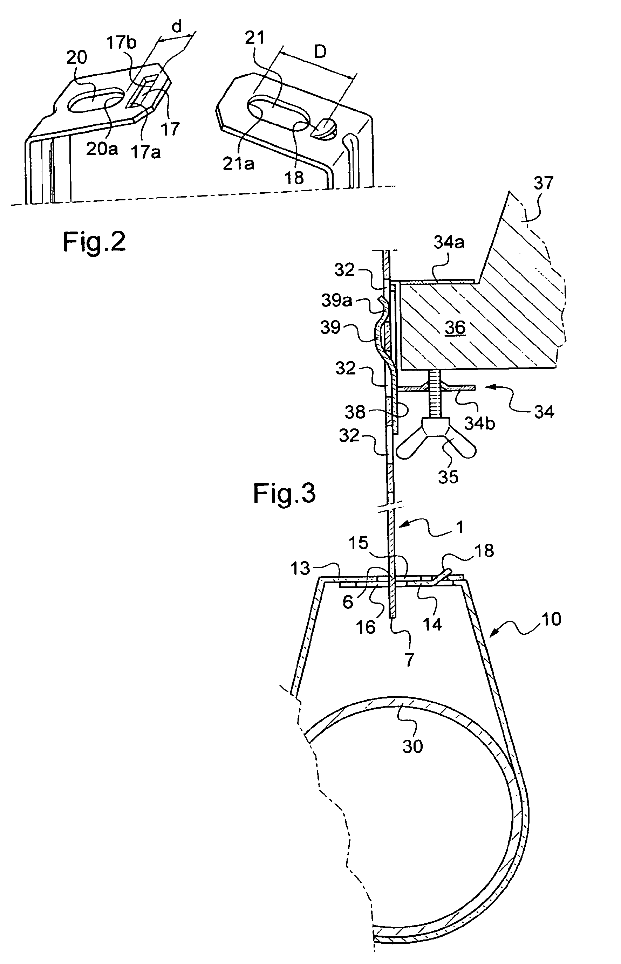

A la figure 2, chaque lumière 17, 18 est oblongue, avec au moins une extrémité 17a, 18a, semi-circulaire. La distance d qui sépare le bord 17b de la fenêtre 17 du sommet du bord semi-circulaire 20a est égale à la distance D qui sépare le sommet du bord semi-circulaire 21a de la ligne de contact de l'ergot 18 avec le bord 17b diminuée du diamètre de ce bord semi-circulaire. Ainsi, la partie rétrécie 6 du ruban de suspension est-elle logée dans un orifice circulaire du collier qui autorise une complète rotation de ce dernier par rapport au ruban de suspension.

A la figure 3, on a représenté la suspente de l'invention en service. La conduite 30 est logée dans le collier 31 qui est refermé sur l'extrémité du ruban 1 de suspension. On retrouve sur cette figure la plupart des éléments déjà décrits avec les mêmes références. L'extrémité 2 d'accrochage du ruban 1 est pourvue d'une pluralité de perforations 32 régulièrement réparties sur la plus grande partie du tronçon de ruban 1.

Un serre-joint 33 comporte un profil 34 en U dont une aile 34a constitue sa mâchoire fixe et dont l'autre aile 34b porte une vis 35 de serrage du talon 36 d'une poutrelle à talon 37 qui constitue un élément constitutif du plancher recouvrant le vide sanitaire dans lequel s'étend le réseau des canalisations 30. Le dos 34c de ce profilé, ici prolongé, du côté de la vis, par une languette 38, porte le moyen de liaison du ruban au serre-joint. Ce serre-joint est connu dans le domaine de la construction et est notamment utilisé pour l'installation des faux plafonds. Le moyen de ce serre-joint destiné à recevoir le tronçon 1 de suspension, est constitué par une patte 39, obtenue par découpe et pliage de la languette du dos 34c, en forme de S qui constitue un crochet que l'on peut introduire, comme représenté, dans l'une des perforations 32 pour assurer la suspension du ruban 1 à la poutrelle 37. La forme un S de ce crochet, qui représente le meilleur mode de réalisation, permet à cette patte d'assurer l'encliquetage de la suspension quand son extrémité recourbée 39a vient se loger dans la perforation 32 immédiatement supérieure à celle qui reçoit la patte. Ce n'est pas sortir du cadre de l'invention que de prévoir plusieurs pattes 39 coopérant avec plusieurs perforations.

On comprend que si la vis 35 comporte des oreilles de sa manoeuvre comme une vis papillon, la suspente de l'invention peut s'installer sans avoir recours au moindre outil. En outre, la présence de la multiplicité des perforations 32 permet à l'opérateur d'obtenir un réglage fin des pentes à fixer pour les canalisations du réseau. Enfin, en plus des avantages déjà décrits, la mise en place de ce réseau s'opère de manière beaucoup plus rapide que selon les techniques traditionnelles.

## Revendications

1. Suspente pour canalisation **caractérisée en ce qu'**elle comprend un premier tronçon de ruban (1) rectiligne comportant, au voisinage (2) de l'une de ses extrémités, des moyens (32) pour son accrochage à la face inférieure d'un plancher et, au voisinage (3) de son autre extrémité, deux encoches latérales (4,5) en vis-à-vis, créant ainsi une tête (7) rattachée au tronçon de ruban par une partie rétrécie (6) et un second tronçon de ruban (10) susceptible d'être élastiquement refermé sur lui-même en boucle avec recouvrement de ses extrémités (13,14), chacune desquelles étant pourvue d'une lumière oblongue (15,16) dont la largeur est comprise entre la largeur de la partie rétrécie (6) du premier ruban et la largeur de la tête (7) et dont la longueur est telle que pour un recouvrement donné desdites extrémités, il existe un passage dont la dimension dans le sens de la refermeture permet à la tête (7) de traverser les deux extrémités superposées.

2. Suspente selon la revendication 1, **caractérisée en ce que** la lumière est une ouverture (20,21) de largeur au moins égale à la largeur de la partie rétrécie (6) du premier ruban et de longueur sensiblement égale à la largeur de la tête du premier ruban avec au moins une de ses extrémités (20a,21a) semi-circulaires.

3. Suspente selon la revendication 1, **caractérisée en ce que** chaque lumière (15,16) comporte une première partie (15a,16a) sensiblement circulaire dont le diamètre est au moins égal à la largeur de la partie rétrécie (6) du premier tronçon de ruban et une fente (15b,16b), ouverte sur la partie centrale et s'étendant à l'opposé de la partie extrême (13a) correspondante du second tronçon de ruban par rapport à la partie circulaire, la plus grande dimension de cette lumière étant d'une valeur permettant le passage à l'intérieur du collier de la tête (7) du premier tronçon de ruban, au-delà de sa partie rétrécie (6).

4. Suspente selon la revendication 2 ou la revendication 3, **caractérisée en ce qu'**elle comporte des moyens de butée qui limitent le déplacement relatif des extrémités (13,14) après relâchement de l'effort de refermeture à une valeur telle que la partie circulaire (15a,16a) de chaque lumière à fente demeure strictement superposée à l'autre ou telle que l'extrémité semi-circulaire (20a,21a) de chaque lumière soit le complément de l'autre.

5. Suspente selon la revendication 4, **caractérisée en ce que** les moyens de butée susdits sont constitués par un ergot (18) ménagé au voisinage (14) de l'une des extrémités du second tronçon de ruban et une fenêtre (17) ménagée dans l'autre extrémité (13) de ce ruban, la forme au repos de ce ruban étant telle que, lors de la refermeture, le bord extrême (13a) du ruban (12) du côté de la fenêtre (17) vient glisser élastiquement sur une pente (18a) dont est pourvu l'ergot, à l'opposé de sa face d'accrochage dans cette fenêtre, de même que le bord (17a) de la fenêtre le plus éloigné de ce bord.

6. Suspente selon l'une des revendications précédentes, **caractérisée en ce que** les moyens d'accrochage du ruban (1) de suspension au plancher comprennent une série de perforations (32) séparées d'un pas régulier, ménagée tout le long du tronçon de ruban (1).

7. Suspente selon la revendication 6 destinée à un plancher à poutrelles (37) à talon (36), **caractérisée en ce que** les moyens d'accrochage comprennent aussi un serre-joint (34) pourvu d'un dos (34c) qui présente une patte (39) en forme de crochet destinée à coopérer avec l'une des perforations (32) susdites.

8. Suspente selon la revendication 7 **caractérisée en ce que** cette patte (39) est formée par au moins une lame élastique en S dont l'extrémité (39a) est apte à se loger dans une perforation (32) adjacente de celle crochetée.

## Claims

1. A pipe hanger **characterized in that** it comprises a rectilinear first strap segment (1) having, in the vicinity (2) of one of its ends, fastener means (32) for fastening it to the bottom face of a floor and, in the vicinity (3) of its other end, two side notches (4, 5) opposite from each other, thereby forming a head (7) connected to the strap segment via a narrow portion (6), and a second strap segment (10) suitable for being resiliently closed onto itself into a loop, with its ends (13, 14) overlapping, each of which ends is provided with an oblong orifice (15, 16) of width lying in the range from the width of the narrow portion (6) of the first strap to the width of the head (7), and of length such that, for a given overlap of said ends, there exists a passage of dimension in the loop-closure direction that enables the head (7) to pass through both of the superposed ends.

2. A hanger according to claim 1, **characterized in that** the orifice is an opening (20, 21) of width not less than the width of the narrow portion (6) of the first strap, and of length substantially equal to the width of the head of the first strap, with at least one of its ends (20a, 21a) being semicircular.

3. A hanger according to claim 1, **characterized in that** each orifice (15, 16) has a substantially circular first portion (15a, 16a) of diameter not less than the width of the narrow portion (6) of the first strap segment, and a slot (15b, 16b) open to the central portion and extending on that side of the circular portion that is opposite from the side on which the corresponding end portion (13a) lies, the larger dimension of said orifice being of a magnitude enabling the head (7) of the first strap segment to pass through into the collar, beyond its narrow portion (6).

4. A hanger according to claim 2 or claim 3, **characterized in that** it has abutment means that limit the relative movement of the ends (13, 14), after the closure force has been released, to a magnitude such that the circular portion (15a, 16a) of each orifice having a slot remains exactly superposed on the circular portion of the other orifice, or such that the semicircular end (20a, 21a) of each orifice is complementary to the semicircular end of the other orifice.

5. A hanger according to claim 4, **characterized in that** said abutment means are constituted by a lug (18) provided in the vicinity (14) of one of the ends of the second strap segment and by a window (17) provided in the other end (13) of said second strap segment, the shape of this strap at rest being such that, during the closure, the end edge (13a) of the strap (12) that is provided with the window (17) comes to slide resiliently over a sloping surface (18a) with which the lug is provided, opposite from its fastening face that fastens into said window, as does the edge (17a) of the window that is further from said end edge.

6. A hanger according to any preceding claim, **characterized in that** the fastener means for fastening the hanger strap (1) to the floor comprise a series of perforations (32) spaced apart at a uniform pitch, which series is provided all the way along the strap segment (1).

7. A hanger according to claim 6, designed for a floor having joists (37) provided with flanges (36), said hanger being **characterized in that** the fastener means further comprise a clamp (34) provided with a web (34c) that has a hook-shaped tab (39) designed to co-operate with any one of said perforations (32).

8. A hanger according to claim 7, **characterized in that** said tab (39) is formed by at least one S-shaped resilient blade, the end (39a) of which is suitable for being received in a perforation (32) adjacent to the perforation into which the blade is hooked.

## Patentansprüche

1. Aufhängung für Rohrleitungen, **dadurch gekennzeichnet, dass** sie einen geradlinigen ersten Bandabschnitt (1) umfasst, der nahe (2) eines seiner Enden Mittel (32) für seine Aufhängung an der Unterseite eines Bodens und nahe (3) seinem anderen Ende zwei seitliche, einander gegenüberliegende Einkerbungen (4, 5) enthält, die so einen Kopf (7) ausbilden, der mit dem Bandabschnitt über einen eingeschnürten Abschnitt (6) verbunden ist, sowie einen zweiten Bandabschnitt (10), der dazu geeignet ist, in einer Schlaufe mit einer Überlappung seiner Enden (13, 14) elastisch auf sich selbst geschlossen zu werden, wobei jedes der Enden mit einem Langloch (15, 16) versehen ist, dessen Breite zwischen der Breite des eingeschnürten Abschnittes (6) des ersten Bandes und der Breite des Kopfes (7) liegt und dessen Länge derart ist, dass bei einer gegebenen Überlappung der genannten Enden ein Durchgang vorhanden ist, dessen Abmessung in Schließrichtung dem Kopf (7) gestattet, durch die beiden übereinander angeordneten Enden hindurchzutreten.

2. Aufhängung nach Anspruch 1, **dadurch gekennzeichnet, dass** das Loch eine Öffnung (20, 21) mit einer Breite ist, die mindestens gleich der Breite des eingeschnürten Abschnittes (6) des ersten Bandes ist, sowie mit einer Länge, die im Wesentlichen gleich der Breite des Kopfes des ersten Bandes ist, wobei mindestens eines seiner Enden (20a, 21a) halbkreisförmig ist.

3. Aufhängung nach Anspruch 1, **dadurch gekennzeichnet, dass** jedes Loch (15, 16) einen im Wesentlichen kreisförmigen ersten Abschnitt (15a, 16a) umfasst, dessen Durchmesser mindestens gleich der Breite des eingeschnürten Abschnittes (6) des ersten Bandabschnittes ist, sowie einen Schlitz (15b, 16b), der zum zentralen Abschnitt offen ist und sich relativ zum kreisförmigen Abschnitt entgegengesetzt zu dem entsprechenden Endabschnitt (13a) des zweiten Bandabschnittes erstreckt, wobei die größte Abmessung dieses Loches einen Wert hat, der den Durchtritt des Kopfes (7) des ersten Bandabschnittes jenseits dessen eingeschnürten Abschnittes (6) ins Innere der Schelle gestattet.

4. Aufhängung nach Anspruch 2 oder Anspruch 3, **dadurch gekennzeichnet, dass** sie Anschlagmittel umfasst, die die relative Verschiebung der Enden (13, 14) nach dem Nachlassen der Schließkraft auf einen Wert beschränken, derart, dass der kreisförmige Abschnitt (15a, 16a) jedes Loches mit Schlitz genau über dem anderen angeordnet bleibt oder derart, dass das halbkreisförmige Ende (20a, 21a) jedes Loches die Ergänzung zum anderen ist.

5. Aufhängung nach Anspruch 4, **dadurch gekennzeichnet, dass** die oben genannten Anschlagmittel von einer Nase (18) gebildet sind, die nahe (14) eines der Enden des zweiten Bandabschnittes ausgebildet ist, sowie von einem Fenster (17), das in dem anderen Ende (13) dieses Bandes ausgebildet ist, wobei die Form dieses Bandes im Ruhezustand derart ist, dass während des Schließens die fensterseitige Bandendkante (13a) elastisch auf einer Schräge (18a), mit der die Nase entgegengesetzt zu ihrer Fläche zum Einhängen in das Fenster versehen ist, gleitet, ebenso wie die am weitesten von dieser Endkante entfernte Kante (17a) des Fensters.

6. Aufhängung nach einem der vorhergehenden Ansprüche, **dadurch gekennzeichnet, dass** die Aufhängungsmittel zum Aufhängen des Aufhängungsbandes am Boden eine Reihe von Perforationen (32) umfassen, die gleichmäßig beabstandet sind, wobei die Reihe über die gesamte Länge des Bandabschnittes (1) ausgebildet ist.

7. Aufhängung nach Anspruch 6, die für einen Boden mit Balken (37) mit Absatz (36) bestimmt ist, **dadurch gekennzeichnet, dass** die Aufhängungsmittel auch eine Schraubzwinge (34) umfassen, die mit einem Rücken (34c) versehen ist, der eine hakenförmige Lasche (39) aufweist, die dazu bestimmt ist, mit einer der oben genannten Perforationen (32) zusammenzuwirken.

8. Aufhängung nach Anspruch 7, **dadurch gekennzeichnet, dass** diese Lasche (39) von mindestens einer S-förmigen Blattfeder gebildet ist, deren Ende (39a) dazu geeignet ist, in eine Perforation (32) einzugreifen, die an diesen Haken angrenzt.
